## Europäisches Patentamt

## European Patent Office

## Office européen des brevets

(19)

(11) Publication number: **0 035 850**
**A1**

# EUROPEAN PATENT APPLICATION

(21) Application number: **81300815.8**

(22) Date of filing: **27.02.81**

(51) Int. Cl.³: **C 03 B 3/00**
**C 03 B 5/06, C 03 B 5/027**
**C 03 B 5/235**

(30) Priority: **29.02.80 US 125797**
**29.02.80 US 125798**

(43) Date of publication of application:
**16.09.81 Bulletin 81/37**

(84) Designated Contracting States:
**DE FR GB IT NL**

(71) Applicant: **FORTY-EIGHT INSULATIONS INC.**
**Box 1148**
**Aurora Illinois(US)**

(72) Inventor: **Dejaiffe, Robert**
**900 Richard Street**
**Aurora Illinois(US)**

(72) Inventor: **Kels, Edward L.**
**1255 Woodland Avenue**
**Batavia Illinois(US)**

(74) Representative: **Baldock, Hugh Charles**
**Lloyd Wise, Tregear & Co. Norman House 105-109**
**Strand**
**London, WC2R 0AE(GB)**

(54) **Melting system, electric furnace and process for use in the production of high temperature mineral wool insulation.**

(57) A method and apparatus for melting low-cost raw materials such as blast furnace slag, basalt, feldspar or electrophos slag in the formation of high temperature mineral wool insulation. The low-cost mineral stock material (22) is fed in particulate form continuously to a preheater (10) in which it is elevated to a temperature range of between 1500°F and 2000°F by forcing hot combustion gases through a vertical column (24) of the particulate stock material (22). Volatiles such as water and carbon dioxide are thus removed from the stock material. The preheated stock material is distributed to the top of an electric melting furnace (12) in the nature of a receptacle closed by a cover or crown (64) through which spaced carbon electrodes (66) extend from an external support and also through which particulate stock material is introduced over a substantial area of a melt contained in the receptacle. The receptacle of the furnace (12) is defined by a substantially sealed external shell (70, 78) having an inner lining of carbon brick (58,60) covering the floor and extending upwardly on the sidewalls thereof to an upper limit or edge defined by the plane of the top surface (86) of liquid melt maintained in the furnace (12). An outer lining of carbon paste (82) is sandwiched between the inner brick lining (60) and the outer shell (78). The inner lining is capped with a ring of refractory (88) and a water cooling conduit (90) is embedded in the outer lining (82) at the plane of the liquid level to develop a fused or solidified glass lining only at the juncture of the refractory ring (88) and the inner lining of carbon brick (80). A substantially homogeneous low-viscosity liquid glass melt is continuously discharged from the furnace.

./...

EP 0 035 850 A1

FIG. 1.

FIG. 3.

-1-

MELTING SYSTEM, ELECTRIC FURNACE AND PROCESS
FOR USE IN THE PRODUCTION OF HIGH TEMPERATURE
MINERAL WOOL INSULATION

This invention relates to the production of mineral wool insulation and more particularly, it concerns an improved method and apparatus for melting raw materials used in the manufacture of high temperature mineral wool insulation.

In the manufacture of high temperature mineral wool insulation such as rock wool blankets for insulating boilers and other surfaces heated to temperatures of 1200°F, from blast furnace slag, basalt and other low-cost, primarily siliceous raw materials, a liquid or glass melt is first formed for subsequent fiberizing to provide the insulation product. Because of the high temperatures required to melt the raw materials or rock and in part also because of the composition of the material, present melting processes are limited largely to the use of metallurgical cupolas in which the rock is placed directly onto a bed of burning coke so that on melting, the molten rock or glass drips out of the bed for collection and passage to a fiber forming station or a fiberizer.

The process presently in use is fraught with numerous problems including increasingly high costs, limited range of glass compositions capable of being used, environmental contamination and inconsistencies in the product formed. For example, the availability of coke sufficiently high in quality to withstand handling in the melting process without loss due to coke breakage and to be free of impurities which could contaminate the glass melt has steadily deteriorated with the result that increased costs of the coke itself represent substantially added costs to the present process. Irregularity in the operation of the cupola adversely affects melting and delivery rates to the fiberizer. In the present process, for example, the cupola is charged periodically at fifteen to twenty minute intervals with additional coke and rock. Such a loading cycle results in a thermal cycle in the cupola which, in turn, causes inconsistent melting and delivery rates. Because of the requirement for combustion air to pass through the coke and rock bed, all of the particulate and chemical emissions of the combustion process are passed from the cupola and require treatment for compliance with environmental standards. The requirement for passing combustion air through the bed limits the size of rock and coke particles in the sense that they must be large enough to allow passage of the combustion air. Also, there is a limit to the range of rock composition that can be effectively melted and assimilated in the stream of glass which drips from the bed.

Although many of the problems presented by the present process of melting slag and low-cost rock for the production of high temperature mineral wool insulation could be avoided by the substitution of an electric melting furnace for the cupola of the present process, a combination of the high temperatures required to melt and retain the molten rock or raw materials for delivery to the fiberizer as well as the chemically active character of the glass formed from these raw materials is severely limiting. For example, the glass formed from slag and other comparable low-cost rock materials is strongly alkaline. When heated to the temperatures required to provide a homogeneous, low viscosity melt, the melt reacts with and deteriorates most types of refractory linings needed to prevent loss of heat from the melt to the exterior of the receptacle or furnace in which the melt is formed. In light of this characteristic. furnace wall cooling techniques have been attempted to maintain a temperature equilibrium by which the molten glass is contained within a lining constituted by a solidified layer of the same glass. The high heat losses experienced with this type of electric melting furnace, however, results in an economic deterrent to the use of an electric melting furnace for the cupola of the presure process. While the problems associated with the cupola of the presently used process, therefore, justify serious consideration of an electric melting system, particularly from the standpoint of attaining a more consistent product by virtue of the added facility for temperature controls and continuity provided by such systems, there is an acute need for improvement in apparatus for melting the rock, retaining the molten rock in a homogeneous, low viscosity condition for delivery to the fiberizer as well as for a system and method of operating the system in the handling of low-cost materials of the type aforementioned.

In accordance with the present invention, low-cost mineral stock material or rock such as blast furnace slag, basalt, feldspar or electrophos slag, in particulate form, is fed, preferably continuously, to a preheater in which the temperature of the rock is elevated to above the slaking temperature thereof to remove volatile oxides such as carbon dioxide and the like, and chemically combined water. The preheated and dried rock is then passed to an electric melter in which it is further heated to form a substantially homogeneous liquid glass melt at a temperature corresponding to a preferred viscosity. In preferred embodiments, the preheated stock material, in particulate form is passed to the top surface of a liquid melt in an electric melting furnace in the nature of a receptable closed by a cover or crown through which spaced carbon electrodes extend from an external support. The particulate stock material, preferably dried and preheated to temperatures only slightly less than the melting temperatures thereof, can also be introduced through the external support to discrete areas on the top of a melt contained in the receptacle defined melt chamber.

In a particular embodiment, the receptacle includes a substantially sealed external steel shell, an inner lining of carbon brick covering the floor of the receptacle and extending upwardly on the sidewalls thereof to an upper limit or edge defined by a plane lying at the upper level of liquid melt to be maintained in the furnace. The inner lining between the carbon brick and the upper edge of the receptacle to be engaged by the crown is established by a ring of cast refractory, preferably bubbled alumina. The space between the inner lining and the exterior shell is filled with a tamped external lining of paste-like carbon to retain the carbon brick interior lining in place, to be resistive to melt which may leak through the carbon brick inner lining and also to absorb or otherwise prevent air, particularly oxygen from passing inwardly to the carbon brick interior lining. The crown is constituted also by a steel interior shell from which an inner crown lining of cast refractory is suspended against an outer fibre insulation fill.

An outlet slot can be positioned at the upper edge of the carbon brick lining to maintain the level of melt in the furnace at an essentially constant level. Deterioration of the carbon brick through oxidation at the upper edge thereof as well as deterioration of the cast refractory ring at the top of the carbon brick through reaction with the high temperature melt may be limited by an isolated cooling ring situated in the region of the outer lining at the plane defined by the top of the liquid melt. Such a cooling ring establishes a thermal equilibrium in the melt at the upper region thereof so that a narrow band of solidified melt or glass protects both the bubbled alumina refractory ring and the upper edge of the carbon brick from the liquid melt.

The preheater is preferably a vertically oriented hollow structure having a sealed inlet for particulate material at its top and extending downwardly to a shelf to provide a free standing column of the particulate material or rock. A burner is located in a chamber in the region of the shelf and hot gases from the burner are drawn upwardly through the rock column by an exhaust fan near the upper end of the preheater but laterally offset from the inlet. The temperature of the rock at the shelf can be monitored to control the burner to maintain the preheated temperature of the rock substantially constant.

The preheated rock is preferably fed to the electric melting furnace by a branched gravity feed conduit system and through the top of the furnace chamber so that the rock is deposited on the top of the melt in a plurality of discrete areas or piles substantially over the surface thereof except for a region or area in the vicinity of the discharge slot. The carbon electrodes are suspended to depend through the cover of the furnace and into the melt. The arrangement of electrodes effects a circulation of the relatively low viscous melt upwardly under the preheated stock material so that the latter is rapidly and continuously assimilated in the liquid melt.

The present invention offers an improved method and apparatus for converting low-cost mineral stock material to a homogeneous and uniform glass melt to be fiberized in the formation of mineral wool, in which method the heating efficiency is optimized. The invention can be adapted to a wide range of stock materials, and the method and apparatus can be easily controlled in the practice of a continuous melting operation. The melting furnace described offers particular advantages; heat loss from the melt is minimized; the melt chamber is substantially isolated from the atmosphere to minimize oxiation of carbon electrodes and to facilitate the use of a highly effective carbon lining; and the provision of an insulative lining system which optimizes the use of carbon and cast refractories. The provision of a system for protecting carbon and cast refractory linings from the corrosive effects of the high temperature glass melt is especially beneficial.

The invention will now be described by way of example and with reference to the accompanying drawings in which like parts are designated by like reference numerals, and wherein:-

Figure 1 is a largely schematic side elevation in partial cross-section illustrating the method and apparatus according to the invention;

Figure 2 is a view of a melting furnace of the invention, in cross-section on line 2-2 if Figure 3;

Figure 3 is a cross-section on line 3-3 of Figure 2;

Figure 4 is a plan view of the melting furnace of Figures 2 and 3; and

Figure 5 is an enlarged fragmentary cross-section similar to that shown in Figure 2.

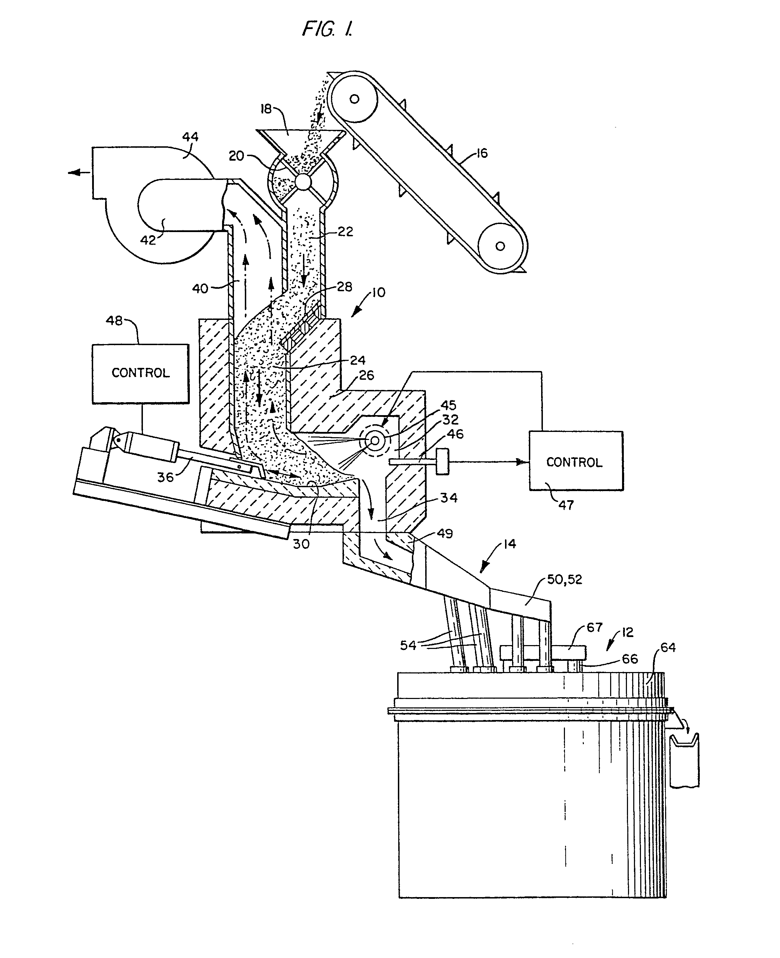

In Fig. 1 of the drawings, the overall system of the present invention is shown to include generally a preheater or dryer 10, an electric melting furnace 12 and a conduit system 14 by which particulate stock material, preheated in the preheater 10, is fed to the melting furnace 12. The preheater 10 is supplied with particulate mineral stock material by suitable means such as a bucket conveyor 16 from a source (not shown). The stock material is deposited in an inlet hopper 18 which opens through a rotatable seal 20 to a vertical feed chute 22. The seal 20 is of a type known as a rotary star seal and functions in the preheater to minimize the passage of air from the hopper 18 to the chute 22.

The chute 22 opens at its lower end to a heating chamber 24 enclosed by a high temperature refractory 26, preferably bubbled alumina, from an inclined ramp 28 which, in effect, displaces the heating chamber 24 laterally from the feed chute 22. The lower end of the heating chamber 24 is defined by a shelf 30 which is located in the region of a burner chamber 32 and an outlet 34 for discharging preheated particulate stock material from the preheater or dryer 10. At least one and preferably two hydraulic or otherwise suitably actuated pushers 36 are arranged for reciprocating pushing movement on the shelf 30 to regulate the discharge of preheated particulate stock material through the outlet 34. Although only one such pusher 36 is illustrated in Fig. 1, it is contemplated that at least two such pushers will be used in practice and synchronized for alternate back and forth reciprocation along the shelf 30.

The heating chamber 24 extends upwardly as a flue 40 which passes to the inlet 42 of a fan or exhauster 44. Thus, hot combustion gases issuing from a burner 45 in the burner chamber 32 will be forcibly drawn through the particulate material in the heating chamber 24 and discharged by the exhauster 44.

To control the temperature to which the particulate stock material is heated in the chamber 24, a temperature sensor 46 is mounted to extend within the burner chamber 32. Signals corresponding to temperature of the rock at the shelf 30 are passed from the sensor 46 to a control 47. The control 47, in turn, regulates operation of the burner 45 to maintain the temperature of the rock within a relatively narrow range of temperatures.

A feed rate control 48 is connected to, and operates to control, the pushers 36 according to the desired feed rate.

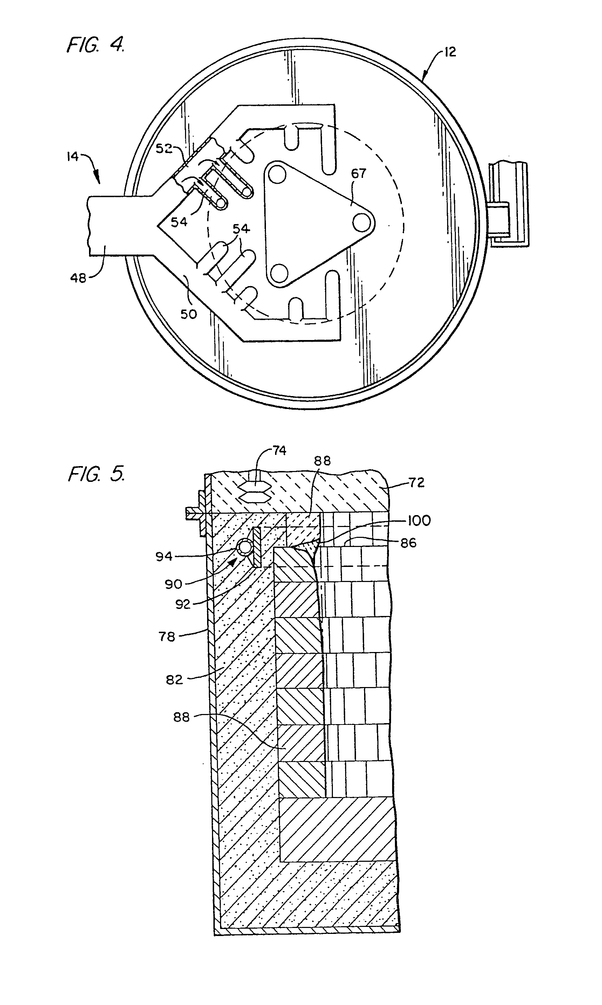

The conduit system 14 transfers the preheated particulate stock material from the outlet 34 to the electric furnace or melter 12 as indicated. As may be seen in Figs. 1 and 4 of the drawings, the conduit system 14 is branched so that the preheated particulate material from the outlet 34 flows by gravity to a main inclined conduit or chute 49 to a pair of branch conduits or chutes 50 and 52 from which a plurality of feeder tubes 54 extend to the top of the melting furnace 12. Though not illustrated in the drawings, it is contemplated that the conduit system may be equipped with appropriate, damper-like deflectors so that the relative flow or distribution of particulate material to the respective tubes 54 may be regulated.

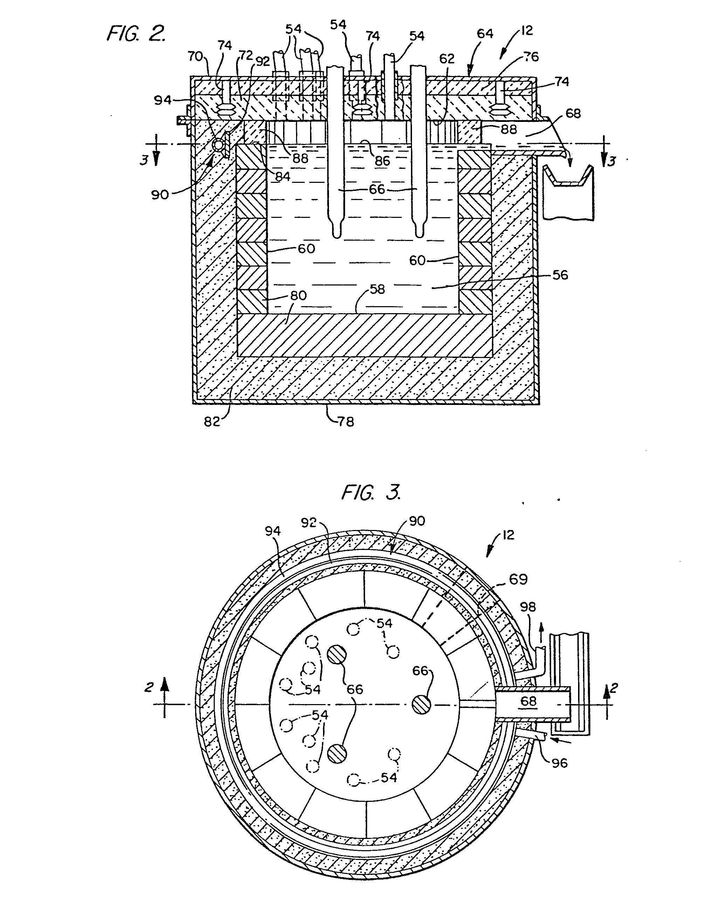

As shown most clearly in Figs. 2-4 of the drawings, the melting furnace 12 in the disclosed embodiment is in the form of a cylindrical vessel having an interior melt chamber 56 defined by a bottom wall or floor 58, vertical sidewalls 60 and a top wall 62 established by a cover or crown 64. Heat transfer from the high temperature melting chamber 56 to the exterior of the furnace is prevented or at least substantially inhibited by a thermal insulation system in the walls 58, 60 and 62 to be described in more detail below.

As shown most clearly in Figs. 2-4, a plurality, specifically three carbon electrodes 66 are supported to extend through openings in the cover or crown 64. The electrodes 66 depend from an exterior support 67 to extend substantially into the melt chamber 56 and operate conventionally to heat a liquid or glass melt contained in the chamber 56 by submerged arc heating, resistance heating or a combination of these types of electrical heating. Also, electrical induction heating is contemplated. As may be seen in Fig. 4, the tubes 54 by which preheated particulate material is introduced through the cover or crown 64 are arranged in a pattern such that the material will be deposited in substantially discrete or separated piles located throughout the horizontal area of the chamber 56 except in an area or region in the proximity of a melt discharge slot or trough 68 through which a molten glass melt is discharged from the chamber to a fiberizer (not shown) and by which the melt is converted to fiber form in the production of rock wool insulation, for example. The trough 68 in practice, is formed of steel, lined with refractory and is cooled by water circulation to develop a protective coating of solidified melt. Also, a water cooled carbon block 69 in the bottom of the vessel includes a removable plug (not shown) to drain iron and other such heavy materials from the chamber 14.

The system of thermal insulation incorporated in the walls of the furnace 12 is important to thermal efficiency of the overall system and to the attainment of a substantially homogeneous liquid melt in the chamber 56. Thus, the crown 64 is constituted by an outer structural support 70 which though represented in Fig. 2 as only a steel shell may, in practice, additionally include a frame or grid of structural members. A relatively thick inner layer 72 of castable refractory, preferably bubbled alumina, is supported from the exterior structure or shell 70 by hangers 74. A layer 76 of refractory insulation is sandwiched between the exterior steel shell 70 and the refractory layer 72.

The bottom and side walls of the furnace 12 are formed by an exterior, substantially sealed steel shell 78, an inner lining of carbon brick 80 and an outer lining 82 of a plastic carbon refractory exemplified by carbon refractory composition commercially available from Union Carbide Corporation under the name "COLD RAMMING CARBON PASTE, Grade RP-3". As may be seen in Fig. 2, the carbon brick 80 extends upwardly from the floor 58 along the sidewalls 60 of the furnace to an upper edge or course 84 which lies in a horizontal plane 86 defined by the level of liquid melt in the chamber 56. A ring 88 of refractory, again preferably bubbled alumina, extends between the top edge 84 of the brick 80 and the under surface of the layer 72 in the crown 64.

Spaced from the outside surface of the brick 80 at the plane 86 separating the top edge 84 of the carbon brick and bubbled alumina ring 88 is a water cooled ring 90. The ring 90 includes a fin-like plate 92 welded or otherwise integrated with a conduit 94 for a coolant such as water circulated through inlet and outlet conduits 96 and 98, respectively, as illustrated in Fig. 3.

It is understood that a water jacket, or the like, may be disposed around the shell 78 for safety purposes, or other reasons.

In the operation of the system illustrated in the drawings to practice the method of the present invention, a variety of mineral stock material exemplified by blast furnace slag, basalt, feldspar and electrophos slag may be used. Such stock material is abundant, low in cost and is primarily constituted by mineral oxides which melt at temperatures above 1700°F. The stock material is crushed or otherwise particulated to pass sieve sizes of from 1/4" to 1 1/2" and preferably 1/2" to 1 1/2". Particles smaller than 1/4" tend to block passage of combustion gases through the column or bed in the chamber 24 of the preheater 10 or tend to be withdrawn by the exhaust fan 44. Particles larger than 1 1/2" increase the time required either to preheat the stock material to above slaking temperatures or to be assimilated by the melt in the furnace 10. Also, excessively large particles block or otherwise reduce the effectiveness of the conduit system 14.

Upon passing from the inlet of the chamber 24 to the outlet chamber 34 of the preheater 10, the temperature of the particulate stock material is raised to within a range of from 1500°F to 2000°F. Preferably the stock material is heated uniformly to be discharged from the preheater at about 1900°F. This temperature is above the slaking temperature of all constituents of the stock material and thus assures that all volatile oxides and chemically combined water will be burned out or otherwise removed in a time period of twenty minutes or less. Also at this temperature, the stock material flows freely as a result of its retaining a solid state. At temperatures in excess of 2000°F, melting of some of the constituents may occur causing a stickiness which will impede free flow of the particulate material from the preheater to the furnace 12.

The removal of volatile compounds which adversely react with carbon, principally oxides such as carbon dioxide as well as water, is important particularly to maintaining the integrity of the carbon electrodes 66 and the carbon brick lining 80 of the melting furnace 12 and, in an induction furnace, the carbon susceptor. In addition, the elevation of the stock material temperature to lower than but close to the melting temperature of the material facilitates the assimilation of the particulate stock material into the liquid melt within the melt chamber 56 of the furnace 12. Also, the thermal efficiency of the system is augmented by the dual drying and heating functions of the preheater 10 coupled with a reduction in the amount of heating required of the melting furnace 12.

14

Electric heating of the melt in the chamber 56 of the furnace 12 further elevates the temperature of the stock material to discharge a homogeneous, relatively low viscosity melt at a temperature of approximately 2600°F. Also, it should be noted in this respect that the action of three electrodes 66 within the melting chamber 56 causes a thermal circulation of the molten rock or glass upwardly against the underside of the freshly deposited solid rock. In this respect, the deposition of the preheated rock on the surface of the melt as discrete piles causes a natural rolling or presentation of separate particles successively to the melt. In this way, the rock is assimilated into the melt without formation of an ice-like or fused shelf of glass between the melt and the stock material. Thus, synchronized introduction of preheated rock material and discharge of molten glass from the furnace 12 will result in a continuous delivery of homogeneous glass melt to the fiberizer (not shown) at which the melt is converted to fiber form. Equally as important, control over the feed rate, melting rate and discharge rate from the furnace 12 enables the level of the melt in the chamber 56 to be maintained fairly constantly at the predetermined plane 85 defining the upper edge 84 of the carbon brick lining 80.

Although the composition of the melt may vary, a typical example of melt composition resulting from practice of the present invention is represented by the following:

| Compound | Percentage by Weight | Variation (+ or -) |
|----------|----------------------|--------------------|
| $SiO_2$ | 40% | 3% |
| CaO | 37 | 3 |
| MgO | 10 | 2 |
| $AL_2O_3$ | 9 | 2 |
| FeO | 2 | 2 |
| Other | 2 | 1 |

Materials of this type are corrosive to substantially all refractory materials known except carbon. Also, the atmosphere above such a melt is corrosive to many refractories. For this reason it is preferred that the layer of cast refractory layer 72 on the underside of the crown 64 as well as the refractory ring 88 be bubbled alumina. This type of cast refractory is highly resistive to the volatile caustic fumes emanating from the liquid melt and is as well a good thermal insulator. Hence, it is preferred in those portions of the inner lining of the furnace which are exposed to the atmosphere above the melt.

Because the carbon brick will burn in air or when exposed to oxygen, maintaining the level of molten rock constantly at the plane 86 assures that the carbon brick will at all times be submerged in the molten rock. The level of the liquid melt will vary slightly, however, and result in a deterioration or erosion of both the upper course of refractory brick and the ring 88 of alumina in the upper region of the chamber 56. To prevent this deterioration of the refractory lining from progressing beyond an acceptable limit as represented, for example, in Fig. 5, a thermal equilibrium is developed in the glass melt by the cooling ring 90 so that a narrow band of solidified glass 100 will develop between the liquid glass and the inner surface of the furnace walls in the region of the cooling ring 90. Deterioration of the lining beyond the approximate condition shown in Fig. 5 is prevented by the development of a solid glass lining in a vertical region or band corresponding approximately to the vertical dimension of the cooling fin 92.

In the disclosed embodiment, the water cool ring 90 is embedded in the outer carbon paste lining. While variations in the particular structural organization of the ring may be made without significant change in results, it is important that the ring 90 be preferably spaced from between 1 and 3 inches from the outer surface of the carbon brick 80.

It is to be noted that the outer lining of carbon paste functions not only as thermal insulation by which the transfer of heat from the melt chamber 56 is reduced substantially, but also as a replaceable intermediate barrier between the outer steel shell 78 and the inner lining 80 of carbon brick 80. For example, any of the liquid melt which may pass through the carbon brick would be contained by the inner surface of the carbon paste or outer lining. Similarly, any oxygen which may pass from the atmosphere through the outer shell 78 will react with the outer lining 82 and thus be prevented from contacting the carbon brick 80. In fact, an abundance of oxygen may result in some burning of the carbon paste outer lining 82 but the nature of this material coupled with its containment directly by the steel shell 78, facilitates its ready replacement. In this respect, the thickness of the outer lining of carbon paste preferably is in the range of from 9" to 15" whereas the thickness of the carbon brick may be between 6" and 12" depending on the overall size of the furnace 10.

From the foregoing, the many advantages of the system and method of the present invention will be apparent. For example, a substantial isolation of the rock feed and the melt chamber within the furnace 12 from the atmosphere not only facilitates the use of the carbon lining in the furnace 12 but also minimizes oxidation of the carbon electrodes by which the glass melt is heated. In this respect, carbon is the only known refractory capable of withstanding the corrosive effects of a glass melt formed from the low-cost raw materials mentioned and yet is vulnerable to oxidation when exposed to air or volatile oxides of any type which may be carried into the melt chamber with the stock material feed. The preheater 10 contributes to the effectiveness of the overall system in the sense that it allows the use of virtually any fuel to bring the tmeperature of the stock feed up to within a range very close to the melting point of the material. The organization of the preheater by which the hot combustion gases and air are forcibly withdrawn through the bed acts effectively as a filter by which dust or powder-like particulates generated in the furnace and feed system are removed. Also, the facility provided by the conduit system 14 for distributing the preheated rock feed to the liquid glass melt in the furnace 12 is important from the standpoint of rapid assimilation of the rock into the liquid melt without placing an excessive heat generating burden on the electric furnace.

18

Thus it will be appreciated that as a result of the present invention, a highly effective melting furnace and process is provided by which the above-mentioned objectives are completely fulfilled. It is equally apparent that modifications and/or changes may be made in the disclosed embodiment without departure from the invention. Accordingly, it is expressly intended that the foregoing description is illustrative of a preferred embodiment, not limiting, and that the true spirit and scope of the present invention be determined by reference to the appended claims.

C L A I M S

1.   The method of converting particulate mineral stock material having the melting characteristics of blast furnace slag to a liquid melt in the production of mineral wool, said method comprising the steps of:

preheating the particulate stock material to temperatures in the range of from approximately 1500°F to 2000°F;

removing volatile oxides and chemically combined water from said particulate material while heated to within said range;

feeding the preheated particulate material to an electric melter; and

further heating said particulate material in said melter to form a substantially homogeneous liquid glass melt at a temperature corresponding to a preferred viscosity.

2.   The method recited in claim 1, wherein said stock material is uniformly preheated within said range to a temperature above the slaking temperature and below the melting temperature thereof.

3.   The method recited in claim  1 wherein said stock material is uniformly preheated to approximately 1900°F.

0035850

4. The method recited in either claims 1, 2 or 3, wherein said preheating step includes forcing hot gases through a bed of said stock material.

5. The method recited in either of claims 1, 2 or 3, wherein said feeding step includes distributing said particulate stock material to discrete spaced areas on the top of said liquid glass melt in said melter.

6. The method recited in either claims 1, 2 or 3, wherein said preheating step is carried out continuously.

7. The method recited in claim 5, including the step of continuously discharging said liquid glass melt from said melter.

8. The method recited in either claims 1, 2 or 3, wherein said melter includes a lining of carbon extending from the top level of said liquid glass melt downwardly and a refractory lining above said top level of said liquid glass melt and including further the step of forming a band of solid glass on the inner surface of said carbon and refractory linings only in the region of the top level of said liquid glass melt.

9. Apparatus for converting particulate mineral stock material to a substantially homogeneous liquid melt in the production of high temperature mineral wool said apparatus comprising:

a preheater having a particulate material inlet, a particulate material outlet, a source of hot gases and means for passing said hot gases in heat exchange relation to said particulate material to elevate the temperature thereof and to remove substantially all water and other volatile oxides from said particulate material;

an electric melting furnace having a carbon lined melt chamber and liquid melt outlet means for discharging a liquid melt formed in said chamber in a manner to maintain a constant depth of liquid melt in said chamber; and

means for transferring heated particulate material from said particulate material outlet of said preheater to a plurality of spaced, discrete areas on top of said liquid melt.

10. The apparatus recited in claim 9, wherein said preheater includes means to substantially seal said particulate material inlet against the introduction of air through said inlet.

11. The method recited in claim 9, wherein said preheater includes a generally vertical heating chamber, a generally horizontal shelf between said heating chamber and said particulate material outlet and means to control the feed of said particulate material from said shelf to said particulate material outlet.

12. The apparatus recited in claim 11, wherein said feed control means comprises at least one reciprocal pusher means operative to discharge said particulate material from said shelf to said particulate material outlet.

13. The apparatus recited in either of claims 11 or 12, wherein said source of hot gases comprises a burner chamber positioned laterally from said heating chamber at the level of said shelf.

14. The apparatus recited in claim 13, including a burner in said burner chamber, means to sense the temperature of material in said heating chamber, and means to regulate said burner in accordance with the temperature of material in said housing chamber.

15. The apparatus recited in claim 9, wherein said melting furnace comprises means to substantially isolate said melt chamber from the atmosphere.

16. The apparatus recited in claim 15, wherein said furnace comprises a carbon lining about the bottom and sides of said melt chamber up to a plane defined by the top of said liquid melt, a cast refractory lining over the top of said chamber and down to the upper edge of said carbon lining, and cooling means to solidify said glass melt on the inner surface of said linings in a narrow band spanning the juncture of said carbon and refractory linings.

17. The apparatus recited in either claims 15 or 16, wherein said electric furnace comprises three spaced carbon electrodes depending from the top of said melting chamber.

18. The apparatus recited in claim 16, wherein said carbon lining comprises an inner lining of carbon brick and an outer lining of carbon paste.

19. The apparatus recited in claim 18, comprising a closed steel shell on the exterior of said outer lining.

20. The apparatus recited in claim 9, wherein said means for passing said hot gases includes means for forcibly drawing said gases through said particulate material.

21. A glass melting furnace comprising:

top, bottom and side walls to define a melt chamber, each of said bottom and side walls including a substantially sealed external shell and a carbon lining of sufficient thickness to inhibit the transfer of heat from a liquid melt contained in said chamber;

electric means for heating the liquid melt contained in said chamber; and

means to maintain the top of said liquid melt at a predetermined substantially constant distance from the bottom of said chamber;

said carbon lining extending from said bottom wall upwardly along said sidewalls to an upper edge lying at a plane defined by the top of said liquid melt.

22. The apparatus recited in claim 21, wherein said carbon lining comprises an inner lining of carbon brick and an outer lining of carbon paste.

23. The apparatus recited in claim 21, wherein said sidewalls comprise an inner lining ring of refractory material on the upper edge of said carbon lining.

24. The apparatus recited in claim 23, including a cooling ring on the exterior of said lining at the approximate level of said plane to form a solidified band of said glass melt on the inner juncture between said lining ring and said carbon ring.

25. The apparatus recited in claim 24, wherein said cooling ring comprises a water pipe and a heat transfer fin secured to said water pipe.

26. The apparatus recited in claim 21, wherein said top wall is defined by a crown having a lining of refractory material.

27. The apparatus recited in either of claims 23 or 26, wherein said refractory comprises bubbled alumina.

Claim(s) Nr 28-30 deemed
to be abandoned

28. The apparatus recited in claim 21, wherein said electric means comprises a plurality of carbon electrodes extending vertically through said top wall and external means to support said electrodes.

29. The apparatus recited in claim 21, wherein said means to maintain the top of said liquid melt at a predetermined substantially constant distance from the bottom of said chamber comprises a liquid glass outlet opening near the top of said sidewalls and means to continuously introduce particulate stock material to the top of said chamber.

30. The apparatus recited in claim 29, wherein said means to introduce particulate material to the top of said chamber comprises a plurality of spaced inlet openings distributed throughout a substantial area of said top wall.

31. In an electric glass melting furnace having a melt chamber defined by top, bottom and side walls and means to maintain the top of a liquid melt in said chamber at a predetermined, generally constant distance from the bottom of said chamber, the improvement comprising:

a substantially sealed external shell covering at least said bottom and side walls;

an inner lining of carbon brick on said bottom and sidewalls up to a plane defined by the top of the liquid melt in said chamber; and

an outer lining of carbon paste on said bottom and sidewalls between said inner lining and said outer shell.

32. The apparatus recited in claim 31 wherein said inner lining comprises a ring of bubbled alumina extending from the top of said carbon brick to the top of said sidewalls.

33. The apparatus recited in claim 31, wherein said outer lining and said exterior shell extend to the top of the sidewalls to establish with said ring a flush upper edge in said sidewalls.

34. The apparatus recited in claim 33, wherein the top wall comprises an inner lining of bubbled alumina having a flush outer edge to rest directly on said flush upper edge of said sidewalls.

35. The apparatus recited in either of claims 33 or 34, including water cooling means outside of said inner lining at the level of said plane.

36. The apparatus recited in claim 35, wherein said water cooling means comprises a water circulating conduit and a vertical plate secured to said conduit.

1/3

*FIG. I.*

CONTROL

CONTROL

FIG. 2.

FIG. 3.

FIG. 4.

FIG. 5.

0035850

Application number

EP 81 30 0815

European Patent Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| X | <u>US - A - 2 229 770</u> (RAMSEYER)<br>* Complete specification *<br><br>-- | 1,9,<br>16,21,<br>24,25 |
| X | <u>US - A - 3 459 411</u> (JACOBS)<br>* Complete specification *<br><br>-- | 1,9 |
| X | <u>US - A - 4 113 459</u> (MATTMULLER)<br>* Figures 1,2,4; columns 2-10 *<br><br>-- | 1,9 |
| X | <u>FR - A - 2 242 338</u> (GLAVERBEL-<br>MECANIVER)<br>* Complete specification *<br>& US - A - 3 944 713<br><br>-- | 1,9 |
| | <u>US - A - 2 781 411</u> (GEFFCKEN)<br>* Complete specification *<br><br>-- | 9,15,<br>21 |
| | <u>US - A - 3 800 014</u> (BRICHARD)<br>* Complete specification *<br><br>-- | 16,21,<br>31 |
| EP | <u>DE - A - 2 847 150</u> (BIRMANNS)<br>* Complete specification *<br><br>---- | 1,9 |

### CLASSIFICATION OF THE APPLICATION (Int. Cl.³)

C 03 B 3/00
5/06
5/027
5/235

### TECHNICAL FIELDS SEARCHED (Int. Cl.³)

C 03 B 3/00
5/027
5/033
5/06
5/235
5/12
5/16
5/42

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 15-06-1981 | VAN DEN BOSSCHE |

EPO Form 1503.1  06.78